# EUROPÄISCHE PATENTSCHRIFT

(11) **EP 0 414 641 B1**
(45) Veröffentlichungstag und Bekanntmachung des Hinweises auf die Patenterteilung: **07.01.1993**
(21) Anmeldenummer: 90810615.6
(22) Anmeldetag: 16.08.1990
(51) Int. Cl.: F16L 47/02, F16L 3/16, F16L 7/00

(54) **Fixpunktbefestigung an einer Rohrleitung**
Fixed point fastening on a pipeline
Fixage à point fixe sur un pipeline

(30) Priorität: 25.08.1989 CH 3098/89
(43) Veröffentlichungstag der Anmeldung: 27.02.1991
(73) Patentinhaber: Geberit AG, CH-8645 Jona (CH)
(72) Erfinder: Häsler, Heinz, CH-8645 Jona (CH)
(74) Vertreter: Groner, Manfred

(56) Entgegenhaltungen:
- CH-A- 671 444
- DE-A- 3 411 989

## Beschreibung

Die Erfindung besitzt eine Fixpunktbefestigung nach dem Oberbegriff des unabhängigen Patentanspruchs 1.

Fixpunktbefestigungen oder kurz auch Fixpunkte genannt sind als Bestandteil von Installationssystemen im Sanitärbereich allgemein bekannt. Mit solchen Fixpunktbefestigungen werden unkontrollierbare Bewegungen in Kunststoffleitungen verhindert. Die Fixpunktbefestigungen unterteilen die Kunststoffleitungen in kleine Abschnitte und somit in einzelne kleinere Ausdehnungsbereiche. Die Fixpunktbefestigungen müssen hierbei die Kräfte der Längenausdehnung der Kunststoffleitungen, das Gewicht des durchfliessenden Mediums und auch das Gewicht der Kunststoffrohre aufnehmen. Ein Festklemmen des Rohres mittels einer Rohrschelle genügt aus verschiedenen Gründen nicht.

Nach dem Stand der Technik besteht eine Fixpunktbefestigung aus einer Fixpunktrohrschelle, die das Rohr direkt umgreift und die im Abstand zu einer Gebäudewand an dieser mittels einer Grundplatte befestigt ist. Beidseitig neben der Rohrschelle liegen zur Vermeidung axialer Verschiebungen beidseitig und satt Begrenzungen an. Diese Begrenzungen sind Schweissmuffen oder auch Formteile. Bei längeren Rohrleitungen sind zudem Gleitbefestigungen sowie zur Aufnahme der Ausdehnung beispielsweise Dehnungsschlaufen notwendig. Die Montage dieser Fixpunktbefestigung ist vergleichsweise aufwendig.

Der Erfindung liegt die Aufgabe zugrunde, eine Fixpunktbefestigung der genannten Art zu schaffen, die einfacher und schneller montierbar und dennoch sicher ist. Die Aufgabe wird durch die Erfindung gemäss Anspruch 1 gelöst. Bei der erfindungsgemässen Fixpunktbefestigung sind ausser einem Träger, der an der Gebäudewand zu befestigen ist, lediglich eine Schweissmuffe und eine Rohrschelle erforderlich. Es sind somit gegenüber der bekannten Fixpunktbefestigung weniger Einzelteile und auch weniger und einfachere Arbeitsvorgänge erforderlich.

Nach einer Weiterbildung der Erfindung ist die Schweissmuffe im nicht verschweissten Zustand offen. Damit ist es möglich, auch nach dem Verlegen der Rohrleitung noch eine Fixpunktbefestigung anzubringen. Die Schweissmuffe wird durch Ueberklappen auf die Rohrleitung gesetzt und in die geeignete Position geschoben. Anschliessend wird die Schweissmuffe an der Rohrleitung angeschweisst und die Rohrschelle aufgesetzt. Ein wesentlicher Vorteil der erfindungsgemässen Fixpunktbefestigung wird darin gesehen, dass in Längsrichtung der Rohrleitung weniger Raum als bisher notwendig ist. Die Fixpunktbefestigung kann somit auch bei engen Raumverhältnissen angebracht werden.

Eine sichere Befestigung der Rohrschelle auf der Schweissmuffe wird in konstruktiv einfacher Weise dadurch erreicht, dass die Schweissmuffe eine sich in Umfangsrichtung erstreckende Vertiefung aufweist. Die Vertiefung ist vorzugsweise so dimensioniert, dass die Schweissmuffe mit möglichst geringem axialem Spiel in diese Vertiefung passt.

Weitere vorteilhafte Merkmale ergeben sich aus den übrigen abhängigen Ansprüchen sowie der nachfolgenden Beschreibung. Ein Ausführungsbeispiel der Erfindung wird nachfolgend anhand der Zeichnung näher erläutert. Es zeigen:
Fig. 1 eine Ansicht einer erfindungsgemässen Fixpunktbefestigung,
Fig. 2 ein Querschnitt durch die Fixpunktbefestigung entlang der Linie II - II in Fig. 1,
Fig. 3 eine Seitenansicht einer Schweissmuffe,
Fig. 4 einen Schnitt durch eine Schweissmuffe entlang der Linie IV - IV in Fig. 3,
Fig. 5 eine Ansicht einer gestreckten Schweissmuffe,
Fig. 6 einen Schnitt durch eine Schweissmuffe entlang der Linie VI - VI in Fig. 5, und
Fig. 7 eine Ansicht einer Schweissmuffe gemäss einer Variante.

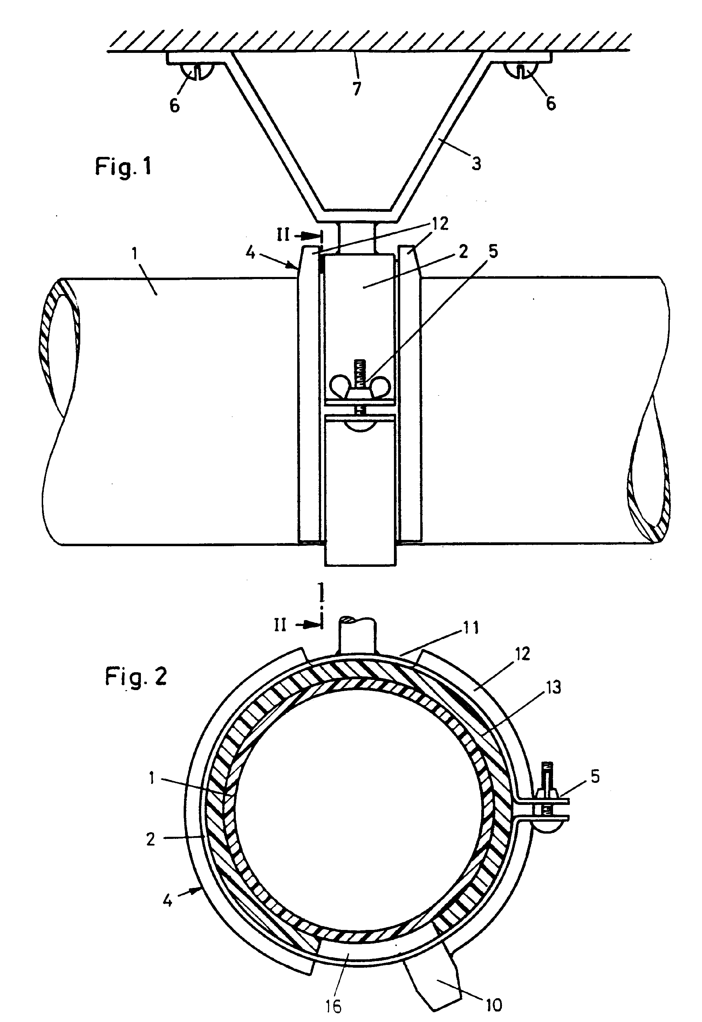

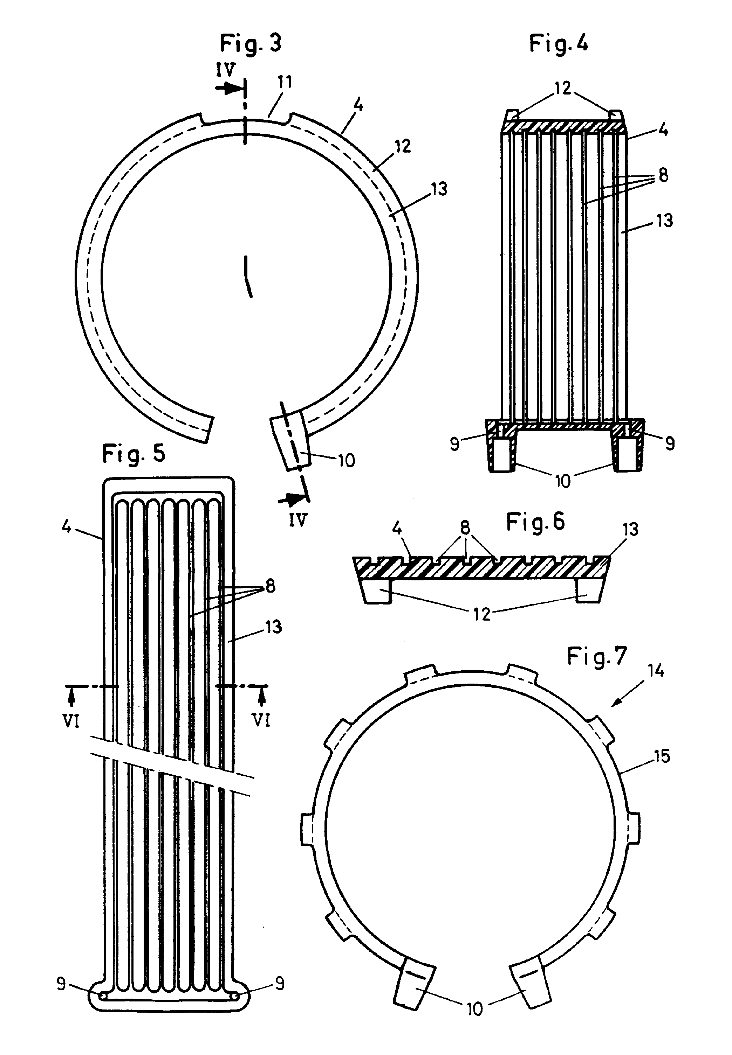

Die Fig. 1 und 2 zeigen ein Leitungsrohr 1 aus schweissbarem Kunststoff, an dem eine Schweissmuffe 4 angeschweisst ist. Die in den Fig. 3 bis 6 näher dargestellte Schweissmuffe 4 ist im Querschnitt etwa 3/4-teilkreisförmig und kann durch Ueberklappen auf die Rohrleitung 1 aufgesetzt und in üblicher Weise verschweisst werden. Die Schweissmuffe 4 kann auch eine volle Schweissmuffe sein, die auf ein Rohr der Rohrleitung 1 aufgeschoben wird. Die Schweissmuffe 4 besitzt eine sich in Umfangsrichtung erstreckende Vertiefung 16, die nur wenig breiter ist als eine Rohrschelle 2, die in diese Vertiefung 16 eingesetzt und mit einem üblichen Verschluss 5 fixiert ist. An der Schweissmuffe 4 angeformt sind zwei seitliche Wulste 12, die sich ebenfalls in Umfangsrichtung um die Aussenseite der Schweissmuffe 4 erstrecken. Diese Wulste 4 verhindern eine axiale Verschiebung der Rohrschelle 2. Mit der Rohrschelle 2 verbunden ist ein Träger 3, der mit Befestigungsmitteln 6 an einer Decke 7 befestigt ist. Der Träger 3 und die Rohrschelle 2 sind an sich bekannt. Im Abstand zur gezeigten Fixpunktbefestigung sind in der Regel weitere Fixpunktbefestigungen oder Gleitbefestigungen angebracht. Die erfindungsgemässe Fixpunktbefestigung eignet sich besonders für Wasserleitungen.

Die in den Fig. 3 bis 6 gezeigte Schweiss- oder Elektromuffe 4 weist einen Körper 12 aus einem Thermoplast auf, der auf seiner Innenseite schmale Rillen 8 besitzt, in die ein hier nicht gezeigter Schweissdraht eingelegt ist. Die Enden dieses Drahtes sind an Oeffnungen 9 nach aussen geführt. Zum Verschweissen werden die Anschlussstellen 10 mit einer elektrischen Quelle verbunden und dadurch der Draht erwärmt.

Die Schweissmuffe 4 besitzt eine Oeffnung 16, die durch Dehnen der Schweissmuffe vergrössert werden kann und die ein Ueberklappen der Schweissmuffe über die Rohrleitung 1 ermöglicht. Um den Schweissvorgang sicherzustellen kann eine hier nicht gezeigte Klammer vorgesehen werden, welche die Schweissmuffe 4 an die Rohrleitung drückt. Um das Ueberklappen der Schweissmuffe 4 zu erleichtern, besitzt sie an der Aussenseite eine Schwächungsstelle 11.

In einer weiteren Variante gemäss Fig. 7 sind auf der Rückseite der Schweissmuffe 14 mehrere Ausnehmungen 15 vorgesehen. Diese Schweissmuffe 14 ist noch wesentlich flexibler und kann auch an unrunde Rohre angelegt werden.

## Patentansprüche

1. Fixpunktbefestigung an einer Rohrleitung (1), insbesondere einer Wasserleitung, mit einer Rohrschelle (2), die im Abstand zu einer Gebäudewand (7) an dieser befestigt ist und welche die Rohrleitung (1) in Axialrichtung unverschiebbar fixiert, dadurch gekennzeichnet, dass die Rohrschelle (2) eine Schweissmuffe (4) an deren Umfang umgreift und mit dieser verbunden ist und dass die Schweissmuffe (4) mit der Rohrleitung (1) verschweisst ist.

2. Fixpunktbefestigung nach Anspruch 1, dadurch gekennzeichnet, dass die noch nicht verschweisste Schweissmuffe (4) offen ist und auf das Rohr durch Ueberklappen aufsetzbar ist.

3. Fixpunktbefestigung nach Anspruch 1 oder 2, dadurch gekennzeichnet, dass die Schweissmuffe (4) einen nicht geschlossenen Querschnitt aufweist.

4. Fixpunktbefestigung nach einem der Ansprüche 1 bis 3, dadurch gekennzeichnet, dass die Schweissmuffe (4) aussen eine sich in Umfangsrichtung erstreckende Vertiefung (16) aufweist, in welche die Rohrschelle (2) eingesetzt ist.

5. Fixpunktbefestigung nach einem der Ansprüche 1 bis 4, dadurch gekennzeichnet, dass die Schweissmuffe (4) einen etwa 3/4-teilkreisförmigen Querschnitt aufweist.

6. Fixpunktbefestigung nach einem der Ansprüche 1 bis 5, dadurch gekennzeichnet, dass die Schweissmuffe (4) am Umfang Schwächungsbereiche (11,15) aufweist, die ein Ueberklappen der Schweissmuffe (4) erleichtern.

## Claims

1. Fixed point fastening on a pipe (1), particularly a water pipe, comprising a pipe clip (2) which is fastened to and spaced apart from a building wall (7) and which fixes the pipe (1) immovably in the axial direction, characterised in that the pipe clip (2) engages around the periphery of a welding sleeve (4) and is joined to the latter, and in that the welding sleeve (4) is welded to the pipe (1).

2. Fixed point fastening according to Claim 1, characterised in that before the welding sleeve (4) has been welded it is open and can be clipped onto the pipe.

3. Fixed point fastening according to Claim 1 or 2, characterised in that the welding sleeve (4) has a cross-section which is not closed.

4. Fixed point fastening according to one of Claims 1 to 3, characterised in that the welding sleeve (4) has on the outside a depression (16) which extends in the peripheral direction and into which the pipe clip (2) is inserted.

5. Fixed point fastening according to one of Claims 1 to 4, characterised in that the welding sleeve (4) has a cross-section in the shape of about three-quarters of a circle.

6. Fixed point fastening according to one of Claims 1 to 5, characterised in that on its periphery the welding sleeve (4) has weakened regions (11, 15) which facilitate clipping-on of the welding sleeve (4).

## Revendications

1. Fixation à point fixe sur une conduite rigide (1), notamment une canalisation d'eau, avec un collier d'attache (2), qui est fixé à une paroi de bâtiment (7) à distance de cette dernière et qui fixe en position la conduite rigide (1) sans possibilité de translation axiale, **caractérisée** en ce que le collier d'attache (2) entoure un manchon à souder (4) sur sa périphérie et lui est assemblé, et en ce que le manchon à souder (4) est assemblé par soudage à la conduite rigide (1).

2. Fixation à point fixe selon la revendication 1, **caractérisée** en ce que le manchon à souder (4) non encore assemblé par soudage est ouvert et peut être posé sur la conduite par rabattement.

3. Fixation à point fixe selon la revendication 1 ou 2, **caractérisée** en ce que le manchon à souder (4) présente une section non fermée.

4. Fixation à point fixe selon l'une des revendications 1 à 3, **caractérisée** en ce que le manchon à souder (4) présente extérieurement un renfoncement (15) s'étendant en direction circonférentielle, dans lequel est inséré le collier d'attache (2).

5. Fixation à point fixe selon l'une des revendications 1 à 4, **caractérisée** en ce que le manchon à souder (4) présente une section approximativement en forme de 3/4 de cercle.

6. Fixation à point fixe selon l'une des revendications 1 à 5, **caractérisée** en ce que le manchon à souder (4) présente sur sa périphérie des régions affaiblies (11, 15) qui facilitent son rabattement sur la conduite.
